# EUROPÄISCHE PATENTANMELDUNG

(11) **EP 1 518 768 A1**
(43) Veröffentlichungstag der Anmeldung: **30.03.2005**
(21) Anmeldenummer: 03021583.4
(22) Anmeldetag: 24.09.2003
(51) Int. Cl.: B60S 9/10, F15B 11/028, F15B 11/024, B66C 23/80

(54) **Vorrichtung zum Abstützen von Plattformen**

(71) Anmelder: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, DX-6990 Ulfborg (DK)
(74) Vertreter: Niedmers, Ole

(57) **Zusammenfassung**

Es wird eine Vorrichtung (10) zum Abstützen von Plattformen (11), auf einem Untergrund (113), insbesondere Fahrzeugen, bei einem Verlast-, Lade- oder Entladevorgang, insbesondere bei Fahrzeugen (11) mit Ladebordwänden, vorgeschlagen, umfassend eine aus einem Gehäuse (12) hydraulisch heraus- und hineinbewegbare Stütze (13), wobei zur Herausbewegung (17) der Stütze (13) in einem ersten Raum eines im Gehäuse (12) verschiebbar ausgebildeten Kolbens (15) mittels eines über eine Hydraulikmittelzufuhrleitung (20) zugeführten Hydraulikmittels (16) ein Druck erzeugt wird und zur Hineinbewegung (18) in einem zweiten Raum (19) mittels des Hydraulikmittels (16) auf den Kolben (15) ein zum ersten Druck entgegengesetzter Druck erzeugt wird. Dabei ist die Hydraulikmittelzufuhrleitung (13) mit dem zweiten Raum (19) verbunden und in eine Verbindungsleitung (21) zwischen der Hydraulikmittelzufuhrleitung (20) und dem ersten Raum (14) ist eine Einrichtung (22) angeordnet, mit der der Druck des auf den ersten Raum (14) wirkenden Druckes des Hydraulikmittels (16) einstellbar ist.

## Beschreibung

Die Erfindung betrifft eine Vorrichtung zum Abstützen von Plattformen auf einem Untergrund, insbesondere Fahrzeugen, bei einem Verlast-, Lade- oder Entladevorgang, insbesondere bei Fahrzeugen mit Ladebordwänden, umfassend eine aus einem Gehäuse hydraulisch heraus- und in diese hineinbewegbare Stütze, wobei zur Herausbewegung der Stütze in einem ersten Raum eines im Gehäuse verschiebbar ausgebildeten Kolbens mittels eines über eine Hydraulikmittelzufuhrleitung zugeführten Hydraulikmittels ein Druck erzeugt wird und zur Hineinbewegung in einem zweiten Raum mittels des Hydraulikmittels an den Kolben ein zum ersten Druck entgegengesetzter Druck erzeugt wird.

Derartige Vorrichtungen werden sowohl bei stationären Einrichtungen bzw. Plattformen als auch bei Fahrzeugen immer dann angewendet, wenn eine Stabilität der Plattform bzw. des Fahrzeuges bei Verlastvorgängen, bspw. bei sogen. Autokränen, die beträchtliche Lasten bei ausgefahrenem Kranarm zu heben und an den Bestimmungsort zu bringen vermögen, die Eigenstabilität des Fahrzeugs nicht ausreicht. Prinzipiell das Gleiche gilt bei festen Plattformen, von denen aus Lasten manipuliert werden sollen, die Eigenstabilität bzw. Standstabilität der Plattform jedoch nicht ausreicht, und prinzipiell gilt dieses schließlich auch für normale Straßen- und sogar Schienenfahrzeuge, wenn große Lasten vom Fahrzeug aus manipuliert werden sollen, die sich in einem kritischen Abstand zum Fahrzeug bzw. der Ladeplattform des Fahrzeugs befinden.

Es kann gesagt werden, daß die gattungsgemäße Vorrichtung in allen nur denkbaren Einsatzgebieten zur Anwendung kommt, bei denen beim Verlast-, Lade- oder Entladevorgang sichergestellt werden muß, daß die Plattform bzw. das Fahrzeug, auf denen ein Lastenmanipulator angeordnet ist, während dieses Vorganges stabil auf einem Untergrund ruht, d.h. nicht umkippt.

Im Stand der Technik sind Vorrichtungen dieser Art bekannt, wobei diese bekannten Vorrichtungen zwei konstruktiv unterschiedlichen Prinzipien folgen. Eine bekannte Vorrichtung dieser Art weist ein einfaches Kolbenzylindersystem auf, wobei mittels eines unter Druck befindlichen Hydraulikmittels gegen die Kraft einer Zugfeder der Kolben aus einem Gehäuse herausbewegt wird, bis die mit der Kolbenstange der Vorrichtung verbundene Stütze auf einem Untergrund bestimmungsgemäß aufliegt. Dann wird manuell ein Ventil geschlossen, so daß kein weiteres Hydraulikmittel mehr in einen im Gehäuse befindlichen Raum eintreten kann, so daß die Herausbewegung des Kolbens aus dem Gehäuse beendet ist. Die Hineinbewegung des Kolbens in das Gehäuse bei Abschluß des Verlast-, Lade- oder Entladevorganges erfolgt durch die Gegenkraft, die die expandierte Zugfeder auf den Kolben bzw. die Kolbenstange ausübt, so daß dann, wenn das Ventil geöffnet wird das Hydraulikmittel wieder aus dem im Gehäuse befindlichen Raum in einen Hydraulikmittelsammelbehälter oder dgl. herausgeführt bzw. herausgedrückt werden kann.

Diese Vorrichtung mit dem vorbeschriebenen Aufbau befindet sich in vielen Anwendungsgebieten in sehr großer Zahl im Einsatz, insbesondere bei Plattformen und Fahrzeugen mit zu manipulierenden Lasten mittlerer Größe.

Eine andere, sich im Einsatz befindende Vorrichtung dieser Art weist ein Gehäuse auf, das in zwei völlig getrennte Kammern bzw. Räume durch einen im Gehäuse angeordneten, heraus- und hereinbewegbaren Kolben unterteilt ist. Der Kolben ist mit einer Kolbenstange verbunden, an der eine Stütze angeordnet ist. Eine Hydraulikmittelzufuhrleitung fördert über ein umschaltbares Ventil Hydraulikmittel in einen ersten Raum, bspw. zum Herausbewegen der Kolbenstange, und führt dabei vom zweiten Raum Hydraulikmittel über eine gesonderte Hydraulikmittelabfuhrleitung aus dem innerhalb des Gehäuses vorgesehenen zweiten Raum heraus, wobei bei umgekehrter Bewegungsrichtung der Kolben bzw. die Kolbenstange in das Gehäuse hineinbewegt wird, und zwar bei entsprechender Umschaltung des besagten Ventils.

Bei beiden vorgenannten unterschiedlichen konstruktiven Ausgestaltungen der Vorrichtung treten mehrere Nachteile signifikant in Erscheinung. Beide Arten der bekannten Vorrichtung zeichnen sich durch ein sehr hohes Gewicht aus, sie sind in ihrer Funktion sehr langsam, es sind aufwendige Maßnahmen erforderlich, um eine Begrenzung der Herausbewegungskraft erforderlich, die Gestehungskosten, Wartungs- und Reparaturkosten sind sehr hoch und es sind vom Umschaltventil bei der zuletzt genannten, oben beschriebenen Vorrichtung zwei Hydraulikleitungen mit gleichen Anforderungen an Druckresistenz, Wartung und Unterhalt erforderlich, was kostenintensiv ist. Ein weiterer wesentlicher Nachteil der zweiten o.g. Vorrichtung ist zudem, daß das Hydraulikventil, da es ein zentrales Funktionsteil ist, sehr wartungsintensiv ist, um die fortwährende Funktion zu gewährleisten und, so zeigt es die Erfahrung der Fachwelt, äußerst störungsanfällig aufgrund äußerer Einflüsse wie Feuchtigkeit, Staub, Straßensalz und anderer Umgebungseinflüsse ist, insbesondere wenn diese bekannte Vorrichtung bei Fahrzeugen für den allgemeinen Transport von Waren im Straßenverkehr eingesetzt wird.

Es ist somit Aufgabe der vorliegenden Erfindung, eine Vorrichtung der eingangs genannten Art zu schaffen, mit der eine robuste Einrichtung zur Verfügung steht, mit der ein schnelles Hineinbewegen und Herausbewegen des Kolbens bzw. der Stütze aus der Vorrichtung möglich ist, die ein geringes Gewicht aufweist, die aufgrund einer angestrebten einfachen Bauweise geringe Gestehungs-, Wartungs- und Ersatzteilkosten aufweist, die auch an einer Plattform bzw. einem Fahrzeug schon vorhandene Hydrauliksysteme leicht angeschlossen werden kann und keine aufwendigen Maßnahmen getroffen werden müssen, die Herausbewegungskraft des Kolbens bzw. der damit verbundenen Stütze zu begrenzen, wobei die Vorrichtung einfach und kostengünstig herstellbar sein soll und sich leicht in ggf. bestehende Hydrauliksysteme integrieren können lassen soll.

Gelöst wird die Aufgabe gem. der Erfindung dadurch, daß die Hydraulikmittelzufuhrleitung mit dem zweiten Raum verbunden ist und in eine Verbindungsleitung zwischen der Hydraulikmittelzufuhrleitung und dem ersten Raum eine Einrichtung angeordnet ist, mit der der Druck des auf den ersten Raum wirkenden Druckes des Hydraulikmittels einstellbar ist.

Der Vorteil der erfindungsgemäßen Lösung besteht im wesentlichen darin, daß diese, wie aufgabengemäß angestrebt, einen außerordentlichen Vorteil gegenüber den im Stand der Technik bekannten Lösungen zeigt, daß nämlich durch die lösungsgemäßen Merkmale auf äußerst einfache, geniale Weise eine durch das erfindungsgemäße Vorrichtungssystem selbst geschaffene Begrenzung der Herausbewegungskraft des Kolbens bzw. der über die Kolbenstange mit dem Kolben verbundenen Stütze ermöglicht wird. Im Gegensatz zu den im Stand der Technik bekannten Vorrichtungen sind keine Maßnahmen über die erfindungsgemäßen vorgeschlagenen Maßnahmen zur Herausbewegungskraftbegrenzung erforderlich. Dadurch ergibt sich ein gegenüber den bekannten Vorrichtungen stark verminderter Raumbedarf für die Vorrichtung und ihre Steuerungsaggregate und damit eine beträchtliche Verminderung des Gewichts der Vorrichtung und ihrer Steueraggregate und eine beträchtliche Verminderung des Herstellungs-, Reparaturund Wartungs- und Austauschaufwandes, falls es doch einmal zu einer Störung der erfindungsgemäßen Vorrichtung kommen sollte. Durch diese Vorteile werden die Gesamtgestehungskosten gegenüber den bekannten Vorrichtungen erheblich reduziert und die Vorrichtung ist ohne aufwendige Maßnahmen, falls gewünscht, in die Hydraulikmittelbereitstellung in schon an der Plattform oder an dem Fahrzeug, an dem die Vorrichtung angeordnet werden soll, zu integrieren.

Gem. einer vorteilhaften Ausgestaltung der Vorrichtung ist in Strömungsrichtung des Hydraulikmittels, bezogen auf die Strömung des Hydraulikmittels bei der Herausbewegung des Kolbens, in der Hydraulikmittelzufuhrleitung vor der Druckeinstelleinrichtung ein Rückschlagventil angeordnet, das auf einfache Weise verhindert, daß beim Hineinbewegen des Kolbens, d.h. wenn die Vorrichtung wieder in ihren nicht abstützenden Grundzustand überführt wird, undefiniert Hydraulikmittel in den zweiten Raum gelangen kann.

Um die Vorrichtung weiter vereinfachen und somit kostengünstiger bereitstellbar machen zu können und die Wartung und ggf. den Austausch von Elementen der Vorrichtung vereinfachen und damit kostengünstiger ausgestalten zu können, sind vorteilhafterweise die Druckeinstelleinrichtung und das Rückschlagventil in einer gemeinsamen Funktionseinheit ausgebildet, was zudem auch noch den Vorteil haben kann, daß die Druckeinstelleinrichtung und das Rückschlagventil, da sie vorzugsweise funktionell zusammenwirken, unmittelbar aufeinander besser abgestimmt werden können als dann, wenn diese aus separaten Elementen bestehen würden, was aber grundsätzlich auch möglich ist.

Vorteilhafterweise ist in der Hydraulikmittelzufuhrleitung zur Vorrichtung ein erstes Betätigungsventil angeordnet, das funktional an sich das eigentliche einzige aktive Betätigungsventil ist. Dieses Ventil kann unmittelbar an der Vorrichtung angeordnet sein, es kann aber auch abgesetzt von der Vorrichtung vorgesehen sein und es kann elektrisch, mechanisch und elektromagnetisch betätigbar sein.

Gem. einer weiteren vorteilhaften Ausgestaltung der Vorrichtung ist der erste Raum mit einer Hydraulikmittelabfuhrleitung verbunden, wobei über diese das Hydraulikmittel bei dem Hineinbewegen des Kolbens in das Gehäuse abgeführt werden kann. Die Hydraulikmittelabfuhrleitung ist regelmäßig dabei mit einem Hydraulikmittelbehälter verbunden, in dem das Hydraulikmittel zur erneuten Einspeisung in das Hydraulikmittelsystem zurückgeführt wird.

Ein weiteres, vom ersten Betätigungsventil völlig unabhängiges zweites Betätigungsventil ist vorteilhafterweise in die Hydraulikmittelabfuhrleitung eingefügt, wobei mittels dieses zweiten Betätigungsventils, zusammen mit dem dafür ebenfalls geöffneten ersten Betätigungsventil, die Hineinbewegung des Kolbens bzw. der Kolbenstange in das Gehäuse eingeleitet bzw. gesteuert wird. Der Druck des Hydraulikmittels im zweiten Raum, der dort im zweiten Raum auch bei geöffnetem ersten Betätigungsventil anliegt, drückt dann das im ersten Raum befindliche Hydraulikmittel über das zweite Betätigungsventil, ggf. über die ggf. vorgesehene Hydraulikmittelabfuhrleitung in den besagten Hydraulikmittelbehälter ohne druckerhöhende oder sonstige Maßnahmen mit großer Geschwindigkeit selbständig.

Wie schon im vorangehend aufgeführten, im Zusammenhang mit der Hydraulikmittelabfuhrleitung angedeutet, ist es ebenfalls aufgrund einer weiteren sehr vorteilhaften Ausgestaltung der Vorrichtung möglich, ebenfalls die Hydraulikmittelzufuhrleitung mit einer an der Plattform oder dem Fahrzeug schon vorhandenen Hydraulikmittelsystem zu verbinden, vorteilhafterweise derart, daß auch druckerzeugungsseitig die Hydraulikmittelzufuhrleitung mit einer schon bestehenden Einrichtung zur Erzeugung des Hydraulikmittels verbunden wird.

Insbesondere für Fahrzeuge, insbesondere für Straßenfahrzeuge, mit denen Lasten von einem Aufgabeort zu einem Bestimmungsort transportiert werden sollen und am jeweiligen Aufgabeort und am Bestimmungsort von einer Laderampe oder einem Untergrund bzw. Boden aus auf die Ladefläche eines Fahrzeugs verbracht werden sollen und am Bestimmungsort von der Ladefläche die transportierten Lasten wiederum auf einen Untergrund bzw. eine Straßenoberfläche oder eine Rampe und dgl. abladen zu können, sind die im Stand der Technik bekannten sogen. Ladebordwandsysteme bekannt, die in der Regel im Heckbereich eines Fahrzeugs angeordnet sind. Zum Anheben, Absenken und ggf. zum Hochklappen und Runterklappen der Ladebordwand des Ladebordwandsystems finden Hydrauliksysteme Anwendung, die bisweilen sogar integral mit dem Ladebordwandsystem ausgebildet sind.

Außerordentlich vorteilhaft ist es, die erfindungsgemäße Vorrichtung derart weiterzubilden, daß die Einrichtung zur Erzeugung des Hydraulikmitteldrucks die Druckerzeugungseinrichtung ist, die den Hydraulikmitteldruck für die Betätigung eines Ladebordwandsystems erzeugt, so daß durch diese Maßnahme erhebliche Kosten, ein erhebliches Gewicht und eine beträchtliche Verminderung des Wartungsaufwandes einschl. einer beträchtlichen Verminderung der Kosten im Zusammenhang mit der Bevorratung von Ersatzteilen und den Austausch von Ersatzteilen möglich ist, die sowohl für die erfindungsgemäße Vorrichtung als auch die Ladebordwandsysteme vereinheitlicht bzw. normiert werden können. Zudem ist das Steuerungssystem der erfindungsgemäßen Vorrichtung auf einfache Weise in das Steuerungssystem der bekannten Ladebordwandsysteme integrierbar, so daß auch dadurch Gewicht und Kosten gespart werden können.

Die Erfindung wird nun unter Bezugnahme auf die nachfolgenden schematischen Zeichnungen anhand von Ausführungsbeispielen beschrieben. Darin zeigen:
- Fig. 1: schematisch im Schnitt in Form einer blockschaltbildartigen Darstellung eine im Stand der Technik bekannte erste Vorrichtung, bei der die Hineinbewegung des Kolbens in ein Gehäuse mittels Federkraft erfolgt, nachdem die Herausbewegung des Kolbens aus dem Gehäuse hydraulisch erfolgt war,
- Fig. 2: eine im Stand der Technik bekannte zweite Vorrichtung mit analogem Aufbau wie Fig. 1, bei der jedoch sowohl die Herausbewegung als auch die Hineinbewegung des Kolbens durch hydraulische Maßnahmen über zwei druckführende Hydraulikmittelzufuhr- bzw. Abfuhrleitungen erfolgt, und
- Fig. 3: die erfindungsgemäße Vorrichtung mit in einer Verbindungsleitung und zwischen der Hydraulikmittelzufuhrleitung und dem ersten Raum angeordneten Druckeinstelleinrichtung.

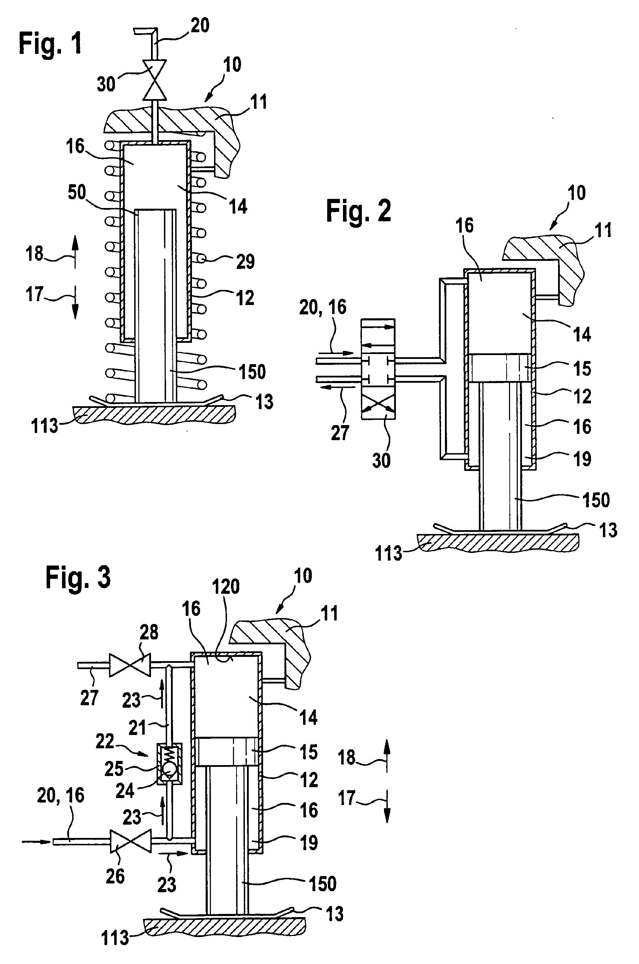

Bevor auf die Erfindung, wie sie in Fig. 3 dargestellt ist, eingegangen wird, wird zunächst zur Darstellung des erfindungsgemäßen Prinzips auf die im Stand der Technik bekannten Bevorrichtungen gem. Fig. 1 und gem. Fig. 2 eingegangen, die die beiden grundsätzlich unterschiedlichen bisherigen Prinzipien des Aufbaues und der Funktion der bekannten Vorrichtungen 10 zeigen.

In Fig. 1 ist in schematischem Schnitt und nach Art eines Blockschaltbildes eine Vorrichtung 10 dargestellt, die aus einem Gehäuse 12 besteht, in dem eine Kolbenstange 150, die integral mit einem Kolben 50 ausgebildet sein kann, bei Anlegen eines unter Druck befindlichen Hydraulikmittels 16, das über eine Hydraulikmittelzufuhrleitung 20 über ein Ventil 30 in den dortigen Raum 14 innerhalb des Gehäuses 12 zugeführt wird, aus dem Gehäuse 12 in Richtung der Herausbewegung 17 aus dem Gehäuse 12 herausbewegt wird. Die Herausbewegung 17 aus dem Gehäuse 12 der Kolbenstange 15, an deren Ende eine Stütze 13 angeordnet ist, erfolgt soweit, bis die Stütze auf einem Untergrund 113 aufliegt. Die Herausbewegung 17 der Kolbenstange 15 erfolgt gegen die Kraft einer Druckfeder 29.

Soll die Vorrichtung 10 wieder in den ursprünglichen Zustand überführt werden, d.h. daß die Kolbenstange sich in Richtung der Hineinbewegung 18 bewegen soll, wird das Ventil 30 geöffnet, wobei durch hier nicht dargestellte Mittel dafür gesorgt wird, daß die Hydraulikmittelzufuhrleitung 20 druckfrei wird, so daß, getrieben durch die Gegenkraft der Druckfeder 29, das sich im ersten Raum befindende Hydraulikmittel 16 verdrängt wird, bis die Kolbenstange 150 eine vorbestimmte Endstellung in hineinbewegtem Zustand erreicht hat.

Die Vorrichtung 10 gem. Fig. 2 unterscheidet sich gegenüber der Vorrichtung 10 gem. Fig. 1 dadurch, daß die Hineinbewegung 18 der Kolbenstange 15 dadurch bewirkt wird, daß mittels des in der Hydraulikmittelzufuhrleitung 20 in den zweiten Raum 19 unter Druck befindliches Hydraulikmittel 16, bei entsprechender Schaltstellung des Ventils 30, eingebracht wird und der Kolben 15, der dort den ersten Raum 14 von einem unterhalb des Kolbens 15 angebrachten zweiten Raum 19 trennt, bezogen auf die Darstellungen, in Richtung der Hineinbewegung 18 bewegt wird, bis der Kolben 15 bzw. die Kolbenstange 150 bzw. die Stütze 13 ihre vorbestimmte Endstellung in Hineinbewegungsrichtung erreicht haben. Das dabei aus dem ersten Raum 14 verdrängte Hydraulikmittel 16 wird aufgrund der entsprechenden Schaltung des Ventils 30 über eine Hydraulikmittelabfuhrleitung 27 abgeführt.

Hier nicht dargestellte gesonderte mechanische und/oder elektrische und/oder hydraulische Maßnahmen sind bei den gemäß den Fig. 1 und 2 bekannten Vorrichtungen 10 erforderlich, um eine Bewegungsbegrenzung des Kolbens 15 innerhalb des Gehäuses 12 bei der Herausbewegung 17 und der Hineinbewegung 18 sicherzustellen, so daß keine Überlastung des Hydrauliksystems, aus dem der Druck für das Hydraulikmittel bezogen wird, erfolgt, was gleichzeitig für die dafür notwendigen entsprechenden Steuerungselemente gilt.

Bei der Vorrichtung 10 gem. der Erfindung, wie sie in Fig. 3 dargestellt ist, hat das Gehäuse 12, den Kolben 15, die Kolbenstange 150 und die an dem freien Ende der Kolbenstange 150 angeordnete Stütze 13 prinzipiell den gleichen Aufbau wie die Vorrichtung 10 gem. Fig. 2, so daß im Hinblick auf deren Aufbau auf die Ausführungen zum Aufbau der Vorrichtung 10 und die Darstellung gem. der Fig. 2 verwiesen wird.

Bei der Vorrichtung 10 gem. der Erfindung ist die Hydraulikmittelzufuhrleitung 20 über ein darin zwischengeschaltetes erstes Betätigungsventil 26 direkt mit dem zweiten Raum 19 verbunden, in dem sich die Kolbenstange 150 in Abhängigkeit des Kolbens 15, mit dem er verbunden ist, in Richtung der Herausbewegung 17 und in Richtung der Hineinbewegung 18 bewegen kann. Darüber hinaus ist die Hydraulikmittelzufuhrleitung 20, hier in Strömungsrichtung 23 des Hydraulikmittels 16 hinter dem Ventil 26, eine Verbindungsleitung 21 geschaltet, die mit dem ersten Raum 14 in Verbindung steht. In diese Verbindungsleitung 21 ist eine Druckeinstelleinrichtung 22 geschaltet, wobei in Strömungsrichtung 23, bezogen auf die Herausbewegung 19 der Kolbenstange 150 bzw. des Kolbens 15 aus dem Gehäuse 12 heraus, vor der Druckeinstelleinrichtung 22 ein Rückschlagventil 24 vorgesehen ist.

Die Druckeinstelleinrichtung 22 und das Rückschlagventil 24 können in einem entsprechend ausgestaltetem konstruktiven Element integral oder in Kombination miteinander in einer Funktionseinheit 25 zusammengefaßt sein.

Der erste Raum 14 ist über eine Hydraulikmittelabfuhrleitung 27 unter Zwischenschaltung eines zweiten Betätigungsventils 28 verbunden. Das zweite Betätigungsventil 28 ist in die Hydraulikmittelabfuhrleitung 27 derart geschaltet, daß die Verbindungsleitung 21, die in den ersten Raum 14 mündet, durch das Sperren oder Öffnen des zweiten Betätigungsventils 28 nicht beeinflußt wird, d.h. die Verbindungsleitung 21 ist funktionell direkt mit dem ersten Raum 14 verbunden.

Die Hydraulikmittelzufuhrleitung 20 kann mit einer gesonderten druckerzeugenden Einrichtung zur Erzeugung des für den bestimmungsgemäßen Betrieb der Vorrichtung 10 erforderlichen Hydraulikmitteldrucks verbunden sein, was gleichermaßen für die Hydraulikmittelabfuhrleitung 27 gilt. Es ist aber sinnvoll, falls möglich, als Einrichtung zur Erzeugung des Hydraulikmitteldrucks die Druckerzeugungseinrichtung zu verwenden, die bspw. für die Betätigung eines hydraulisch betriebenen Ladebordwandsystems herangezogen wird, wenn eben ein derartiges Ladebordwandsystem an dem Fahrzeug 11 oder der Plattform 11 vorhanden ist, an der die Vorrichtung 10 bestimmungsgemäß befestigt ist.

Zur Ausführung der Funktion Herausbewegung 17 des Kolbens 15 bzw. der Kolbenstange 150 und der am freien Ende der Kolbenstange 150 befestigten Stütze 13, wird ein Hydraulikmittel 16 über die Hydraulikmittelzufuhreinrichtung 20 zugeführt. Wird das erste Betätigungsventil 26 geöffnet, steht das Hydraulikmittel 16 mit dem ihm eigenen, bestimmungsgemäßen Druck am zweiten Raum 19 und an der Druckeinstelleinrichtung 22 über das vorgeschaltete Rückschlagventil 24 an.

Ist der Druck des Hydraulikmittels 16 so groß, daß der eingestellte Öffnungsdruck an der Druckeinstelleinrichtung 22 überschritten wird, wird der entsprechende Druck des Hydraulikmittels 16 über die Verbindungsleitung 21 in Strömungsrichtung 23 in den ersten Raum 14 überführt.

Dadurch, daß die Fläche des Kolbens 15, die im ersten Raum 14 dem Druck des Hydraulikmittels 16 ausgesetzt wird, größer als die Fläche des Kolbens 15 ist, die im zweiten Raum 19 dem Hydraulikmittel 16 entgegensteht, wird aufgrund des sich daraus ergebenden Differenzdruckes, der bei der Herausbewegung 17 des Kolbens 15 somit immer größer als der vom Hydraulikmittel 16 auf den Kolben 15 im zweiten Raum 19 ausgeübte Druck ist, der Kolben 15 aus dem Gehäuse 12 herausbewegt, bis die Stütze 13 auf einem bestimmungsgemäßen Untergrund 113 aufliegt. Während der Herausbewegung 17 wird somit auch, da das Rückschlagventil 24 bei der Herausbewegung 17 des Kolbens 15 durch den Druck des zugeführten Hydraulikmittels 16 aus dem Gehäuse 12 geöffnet ist, das im zweiten Raum 19 sich befindliche Hydraulikmittel 16 verdrängt und ebenfalls über die Verbindungsleitung 21 in den ersten Raum 14 überführt.

Aufgrund der konstruktiv immer gewählten größeren Fläche des Kolbens 15 gegenüber dem ersten Raum 14 gegenüber der Fläche des Kolbens 15 im zweiten Raum 19 und aufgrund der vorgesehenen Druckeinstellung mittels der Druckeinstelleinrichtung 22 kann auf einfache Weise der Herausbewegungsdruck, dem der Kolben 15 ausgesetzt wird, eingestellt und begrenzt werden. Gesonderte weitere Maßnahmen sind nicht erforderlich.

Zur Hineinbewegung 18 braucht lediglich das zweite Betätigungsventil 28 bei dafür ebenfalls geöffnetem ersten Betätigungsventil 26 geöffnet zu werden. Dadurch, daß beim Vorgang der Hineinbewegung 18 der Kolbenstange 150 bzw. der daran befestigten flächenförmigen Stütze 13 der erste Raum 14 drucklos wird, treibt der über das erste Betätigungsventil 26 in Strömungsrichtung 23 in den zweiten Raum 19 unter Druck über die Hydraulikmittelzufuhrleitung 20 zugeführtes Hydraulikmittel 16 in den zweiten Raum 19 und bewegt den Kolben 15 in die gewünschte Endstellung des Kolbens 15 bei Hineinbewegung 18. Erreicht der Kolben 15 seine in das Gehäuse 12 hineingezogene Endstellung, die mittels eines hier nicht dargestellten gesonderten Anschlages oder den Gehäusedeckel 120 gebildet wird, würde sich bei weiter geöffnetem ersten Betätigungsventil 26 innerhalb des zweiten Raumes ein immer größer werdender Druck ausbilden in Abhängigkeit des maximal möglichen Drucks des zugeführten Hydraulikmittels 16. Ist der Druck dann derart angewachsen, daß die eingestellte Größe des Druckes in der Druckeinstelleinrichtung 22 überschritten wird, wird das dann zugeführte, überschüssige Hydraulikmittel 16 bei geöffneter Druckeinstelleinrichtung 22 bzw. geöffnetem Rückschlagventil 24 über die Verbindungsleitung 21 und von dort über das zweite Betätigungsventil 28 über die Hydraulikmittelabfuhrleitung 27 zu dem schon erwähnten Hydraulikmittel-Sammelbehälter abfließen. Eine Zerstörung der Vorrichtung, selbst bei geöffnetem ersten Betätigungsventil 26 nach Erreichen des Kolbens 15 in das Gehäuse 12 hineingezogene Stellung, ist ausgeschlossen.

Bei kompletter Herausbewegung der Kolbenstange 15 wird die flächenförmige Stütze 13 auf dem Untergrund 113 aufliegen. Wird dabei beim Aufliegen der Stütze 13 auf dem Untergrund, beim Vorgang der Herausbewegung 17 des Kolbens 15 bzw. der Kolbenstange 150, ist das zweite Betätigungsventil 28 geschlossen, wird sich im ersten Raum 14 der maximal mögliche Druck des Hydraulikmittels 16 einstellen, d.h. der maximal mögliche Druck, der das Hydraulikmittel 16, das über die Hydraulikmittelzufuhrleitung 20 zugeführt wird, einnehmen kann. Dieser Druck ist allerdings wiederum begrenzt durch die Maßnahmen und Mittel, die bei der Hydraulikmitteldruckerzeugungseinrichtung, hier nicht dargestellt, vorgesehen sind, so daß die erfindungsgemäße Vorrichtung für die Herausbewegung 17 der Kolbenstange 15 mit einem maximal möglichen Stützdruck auf dem Untergrund 113 aufliegt, d.h. diesen maximal möglichen Stützdruck auch bei fehlerhafter Bedienung, d.h. bei dem Nichtschließen des ersten Betätigungsventils 26, keine Zerstörung der Vorrichtung 10 bewirkt wird. Das System aus Gehäuse 12, Kolben 15 und der Kolbenstange 150 ist für diesen maximal möglichen Druck des Hydraulikmittels 16 ausgelegt.

Das zweite Betätigungsventil 28 und das erste Betätigungsventil 26 sind derart in bezug auf ihre Funktion miteinander gekoppelt, daß zur Hineinbewegung 18 des Kolbens 15 sowohl das erste Betätigungsventil 26 als auch das zweite Betätigungsventil 28 geöffnet und geschlossen werden. Zur Herausbewegung 17 des Kolbens 15 bzw. der Kolbenstange 150 ist lediglich das erste Betätigungsventil 26 betätigbar und dabei das zweite Betätigungsventil 28 gesperrt. Diese vorangehend beschriebene Kopplung kann elektrisch bzw. elektromechanisch, rein mechanisch, aber auch mittels elektronischer Mittel und entsprechender elektromechanischer Stellglieder bzw. Ventilbetätigungseinrichtungen (nicht dargestellt) erfolgen.

Vielfach sind bei einem Fahrzeug 11 bzw. einer Plattform, das bzw. die für einen Verlast-, Lade- oder Entladevorgang abgestützt werden soll, bei Bewegungen eines Manipulators, eines Krans oder eines Ladebordwandsystems, die am Fahrzeug 11 bzw. einer Plattform angeordnet sind, Bewegungen in mehreren Freiheitsgraden auszuführen. Die Folge ist, daß die Abstützung bzw. die Stützwirkung mit einer Vorrichtung 10, die in einem Freiheitsgrad wirksam ist, in einem anderen Freiheitsgrad völlig unwirksam ist. Aus diesem Grunde ist es sinnvoll, prinzipiell mehrere Stützmöglichkeiten für das Fahrzeug 11 bzw. die Plattform vorzusehen.

Erfindungsgemäß ist es deshalb möglich, die Vorrichtung 10 derart auszugestalten (nicht dargestellt), daß eine Mehrzahl von Gehäusen 12 vorgesehen ist, die alle den gleichen Aufbau, wie vorangehend beschrieben, haben können, d.h. bei denen jeweils eine aus dem jeweiligen Gehäuse 12 hydraulisch heraus- und in dieses hineinbewegbare Stütze vorgesehen ist. Auch bei dieser Ausgestaltung der Vorrichtung 10 werden zur Herausbewegung 17 der jeweiligen Kolbenstange 150 in einem jeweiligen ersten Raum 14 eines jeweiligen Gehäuses 12, in dem verschiebbar ausgebildete jeweilige Kolben 15 vorhanden sind, mittels eines über eine Hydraulikmittelzufuhrleitung 20 zu allen Gehäusen 12 gemeinsam hinzugeführten Hydraulikmittels 14 ein Druck erzeugt. Zur Hineinbewegung 18 in einen jeweiligen zweiten Raum 19 mittels des Hydraulikmittels 16 auf den jeweiligen Kolben 15 wird ein zum ersten Druck entgegengesetzter Druck erzeugt.

Insofern sind alle Funktionen bei einer die Vorrichtung 10 bildenden Mehrzahl von Gehäusen 12 alle Details des jeweiligen Aufbaues, wie vorangehend beschrieben, grundsätzlich identisch.

Bei der modifizierten Ausgestaltung der Vorrichtung 10 mit mehreren Gehäusen 12 ist allerdings die Hydraulikmittelzufuhrleitung 20 mit allen jeweiligen zweiten Räumen 19 aller Gehäuse 12 verbunden, wobei aber lediglich eine Verbindungsleitung 21 zwischen der Hydraulikmittelzufuhrleitung 20 und den jweiligen ersten Räumen aller Gehäuse 12 eine einzige Einrichtung 22 angeordnet ist, mit der der Druck des auf die jeweiligen ersten Räume 14 aller Gehäuse 12 wirkenden Druckes des Hydraulikmittels 16 einstellbar ist.

Es handelt sich also bei dieser modifizierten Ausführungsform der Vorrichtung um eine funktionsmäßige Parallelschaltung mehrerer Vorrichtungen 10 bzw. mehrerer Gehäuse 12 mit den darin aufgenommenen Funktionselementen. Auf diese Weise können mehrere Vorrichtungen 10, wie im Zusammenhang mit der Grundausgestaltung beschriebene, funktionsmäßig zusammengefaßt werden, wobei bei einer beliebigen Anzahl von vorgesehenen, derart zusammengefaßten Vorrichtungen 10 lediglich nur eine Verbindungsleitung zwischen der Hydraulikmittelzufuhrleitung und den jeweiligen ersten Räumen und nur eine Einrichtung 22 vorgesehen ist, mit der der Druck des auf die jeweiligen ersten Räume 14 wirkenden Druckes des Hydraulikmittels 16 einstellbar ist. Alle Vorrichtungen der so gebildeten Gesamtvorrichtung 10 sind somit gleichzeitig zur Herausbewegung 17 und zur Hineinbewegung 18 der jeweiligen Kolbenstangen 150 mit daran angeordneten Stützen 13 befähigt.

Es können zwei, drei und im Prinzip beliebig viele Vorrichtungen dieser Art die Gesamtvorrichtung 10 bilden.

Folgendes Berechnungsbeispiel gibt einen Überblick über das vorteilhafte erfindungsgemäße System. Das Gehäuse 12 habe innen einen kreisförmigen Querschnitt.

Der Öffnungsdruck der Druckeinstellungseinrichtung 22 sei hier mit 50 bar angenommen. Dabei habe der
Kolben einen Durchmesser von 50 mm = 19,63 cm² und
der Durchmesser der Kolbenstange betrage 30 mm = 7,02 cm².

Die Einstellung des Drucks bei der Druckeinstelleinrichtung liege bei 50 bar und der maximale Versorgungsdruck in der Hydraulikmittelzufuhrleitung betrage 200 bar.

Der maximale Druck, dem das zylindrische Gehäuse 12 standzuhalten vermag, betrage 250 bar.

Die Kraft bei der Herausbewegung beträgt somit maximal (150 x 19,63) ./. (200 x 7,07) = 432 dN.

Die maximale Stützkraft beträgt somit 250 x 19,63 = 4.908 dN.

### Bezugszeichenliste:

- 10: Vorrichtung
- 11: Fahrzeug / Plattform
- 12: Gehäuse
- 120: Gehäusedeckel
- 13: Stütze
- 113: Untergrund
- 14: erster Raum
- 15: Kolben
- 150: Kolbenstange
- 16: Hydraulikmittel
- 17: Herausbewegung
- 18: Hineinbewegung
- 19: zweiter Raum
- 20: Hydraulikmittelzufuhrleitung
- 21: Verbindungsleitung
- 22: Einrichtung (Druckeinstelleinrichtung)
- 23: Strömungsrichtung
- 24: Rückschlagventil
- 25: Funktionseinheit
- 26: Betätigungsventil (erstes)
- 27: Hydraulikmittelabfuhrleitung
- 28: Betätigungsventil (zweites)
- 29: Feder
- 30: Ventil

## Patentansprüche

1. Vorrichtung (10) zum Abstützen von Plattformen (11) auf einem Untergrund (113), insbesondere Fahrzeugen, bei einem Verlast-, Lade- oder Entladevorgang, insbesondere bei Fahrzeugen mit Ladebordwänden, umfassend eine aus einem Gehäuse (12) hydraulisch heraus- und in dieses hineinbewegbare Stütze (13), wobei zur Herausbewegung (17) der Stütze (13) in einem ersten Raum (14) eines im Gehäuse (12) verschiebbar ausgebildeten Kolbens (15) mittels eines über eine Hydraulikmittelzufuhrleitung (20) zugeführten Hydraulikmittels (16) ein Druck erzeugt wird und zur Hineinbewegung (18) in einem zweiten Raum (19) mittels des Hydraulikmittels (16) auf den Kolben (15) ein zum ersten Druck entgegengesetzter Druck erzeugt wird, **dadurch gekennzeichnet, daß** die Hydraulikmittelzufuhrleitung (20) mit dem zweiten Raum (19) verbunden ist und in eine Verbindungsleitung (21) zwischen der Hydraulikmittelzufuhrleitung (20) und dem ersten Raum (14) eine Einrichtung (22) angeordnet ist, mit der der Druck des auf den ersten Raum (14) wirkenden Druckes des Hydraulikmittels (16) einstellbar ist.

2. Vorrichtung nach Anspruch 1, **dadurch gekennzeichnet, daß** in Strömungsrichtung (23) des Hydraulikmittels (16) bei Herausbewegung des Kolbens (15) in der Hydraulikmittelzufuhrleitung (20) vor der Druckeinstelleinrichtung (22) ein Rückschlagventil (24) angeordnet ist.

3. Vorrichtung nach Anspruch 2, **dadurch gekennzeichnet, daß** die Druckeinstelleinrichtung (22) und das Rückschlagventil (24) in einer gemeinsamen Funktionseinheit (25) ausgebildet sind.

4. Vorrichtung nach einem oder mehreren der Ansprüche 1 bis 3, **dadurch gekennzeichnet, daß** in der Hydraulikmittelzufuhrleitung (20) zur Vorrichtung (10) ein erstes Betätigungsventil (26) angeordnet ist.

5. Vorrichtung nach einem oder mehreren der Ansprüche 1 bis 4, **dadurch gekennzeichnet, daß** der erste Raum (14) mit einer Hydraulikmittelabfuhrleitung (27) verbunden ist.

6. Vorrichtung nach Anspruch 5, **dadurch gekennzeichnet, daß** in die Hydraulikmittelabfuhrleitung (27) ein zweites Betätigungsventil (28) angeordnet ist.

7. Vorrichtung nach einem oder mehreren der Ansprüche 1 bis 6, **dadurch gekennzeichnet, daß** die Hydraulikmittelzufuhrleitung (20) druckerzeugungsseitig mit einer Einrichtung zur Erzeugung des Hydraulikmitteldrucks verbunden ist.

8. Vorrichtung nach Anspruch 7, **dadurch gekennzeichnet, daß** die Einrichtung zur Erzeugung des Hydraulikmitteldrucks die Druckerzeugungseinrichtung ist, die den Hydraulikmitteldruck für die Betätigung eines Ladebordwandsystems erzeugt.

9. Vorrichtung nach einem oder mehreren der Ansprüche 1 bis 8, **dadurch gekennzeichnet, daß** eine Mehrzahl von Gehäusen (12) vorgesehen ist, bei denen jeweils eine aus dem jeweilien Gehäuse (12) hydraulisch heraus- und in dieses hineinbewegbare Stütze (13) vorgesehen ist, wobei zur Herausbewegung (17) der jeweiligen Stütze (13) in einem jeweiligen ersten Raum (14) eines im jeweiligen Gehäuse (12) verschiebbar ausgebildeten jeweiligen Kolben (15) mittels eines über eine Hydraulikmittelzufuhrleitung (20) zu allen Gehäusen (12) gemeinsam zugeführten Hydraulikmittels (16) ein Druck erzeugt wird und zur Hineinbewegung (18) in einem jeweiligen zweiten Raum (19) mittels des Hydraulikmittels (16) auf den jeweiligen Kolben (15) ein zum ersten Druck entgegengesetzter Druck erzeugt wird, und wobei die Hyraulikmittelzufuhrleitung (20) mit allen jeweiligen zweiten Räumen (19) verbunden ist und in die eine Verbindungsleitung (21) zwischen der Hydraulikmittelzufuhrleitung (20) und den jeweiligen ersten Räumen eine Einrichtung (22) angeordnet ist, mit der der Druck des auf die jeweiligen ersten Räume (14) wirkenden Druckes des Hydraulikmittels (16) einstellbar ist.
